# EUROPEAN PATENT APPLICATION

(11) **EP 1 143 354 A2**
(43) Date of publication of application: **10.10.2001**
(21) Application number: 01302762.8
(22) Date of filing: 26.03.2001
(51) Int. Cl.: G06F 17/30

(54) **Operating an on-line informational database**

(30) Priority: 03.04.2000 US 541777
(71) Applicant: Questia Media America Inc., Houston, Texas 77046 (US)
(72) Inventor: Williams, Troy L, Houston Texas 77046 (US)
(74) Representative: Wombwell, Francis

(57) **Abstract**

A system (10) enables users to access an on-line database (16) containing content from a variety of different content providers. The content providers may be compensated based on the demand for their content in terms of standardized units. The service provider is protected since the proceeds to the content providers are determined based on the relative number of times content provided by a content provider is accessed by subscribers in said standardized units.

## Description

### Background

This invention relates generally to informational databases that may be accessed on-line.

With the onset of the so-called information age, a large amount of information is available to an increasing number of people. People with access to personal computer systems may store and retrieve large amounts of data on their own systems. In addition, through access to the Internet, an ever-increasing amount of data is available.

However, there is a large amount of information that is not conventionally made available through the Internet. Much of this information is in the form of books and magazines that are published in paper form. For example, a large number of textbooks are only available in paper form.

In many cases, the reason information is not made available over the Internet is because there is no effective way to distribute this information on a subscription basis. There may be no practical way to enable a service provider to collect a fee in return for access to the information.

In many cases, informational databases accessible through the Internet offer information for free or on a metered basis. In a metered system, the user may be charged for on-line time, on a pay-per-use basis, or for each data search, as examples.

Another problem arises in connection with databases that provide information from a number of diverse content providers. Obviously, such a database is more desirable because users may obtain access to a large number of different information sources at one location. However, to create such a system requires an efficient technique for determining how to allocate revenues among the various content providers.

At the same time, it would be desirable to enable subscribers to access data from a variety of different content providers at a very reasonable cost. However, if subscribers must pay each time they access the database, there is a disincentive to effectively utilize the database. Subscribers concerned about cost may be reluctant to utilize a pay-per-use database to the fullest extent. As a result, they may fail to fully perceive the value of the database.

Thus, there is a need for a cost-effective way to make content from a variety of different providers available on-line.

### Brief Description of the Drawings

Figure 1 is a schematic depiction of one embodiment of the present invention;
Figure 2 is a depiction of the operation of the embodiment shown in Figure 1 in accordance with one embodiment of the present invention;
Figure 2A is a schematic depiction of the operation of the fund distribution software shown in Figure 2 in accordance with one embodiment of the present invention;
Figure 3 shows a page hierarchy for implementing a database in accordance with one embodiment of the present invention;
Figure 4 shows the data structure of a page in accordance with one embodiment of the present invention;
Figure 5 shows a data structure table which may be utilized in accordance with one embodiment of the present invention;
Figure 6 is a flow chart for setting up the system shown in Figure 1;
Figure 7 is a flow chart for software for enabling users to access the system shown in Figure 1 in accordance with one embodiment of the present invention; and
Figure 8 is a flow chart for software to account and allocate for revenue earned in accordance with one embodiment of the present invention.

### Detailed Description

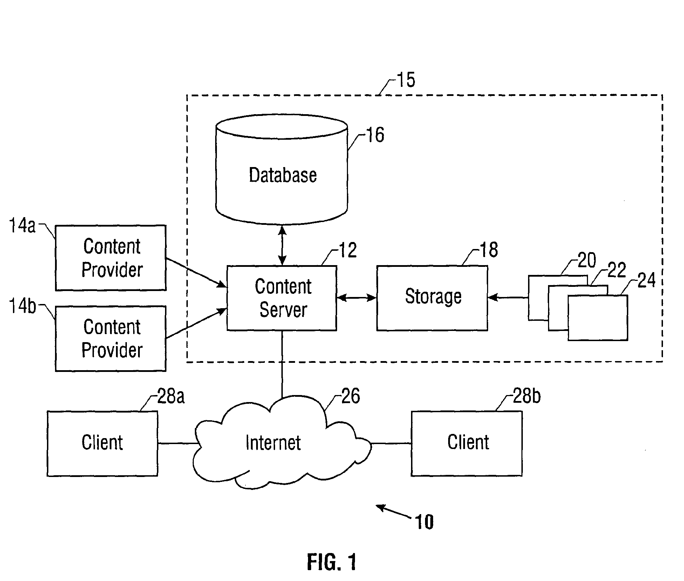

Referring to Figure 1, an on-line information system 10 may include a service provider 15 accessible over the Internet 26. The service provider 15 may include a content server 12 and a database 16. The database 16 may be loaded with information provided by a plurality of content providers such as the content providers 14a and 14b. The content providers 14 provide content data that may be converted to electronic files representing textual, graphical, video, audio, software or other content formats. The textual data, for example, may correspond to information conventionally found in paper formats such as books, magazines and the like.

Each of the content providers 14 may provide the data in an organization conventionally associated with a given media. Thus, the electronic files corresponding to a book may be divided among chapters and pages. Electronic data corresponding to video may be divided according to playback time where time codes, in accordance with the Society of Motion Picture and Television Engineers (SMPTE) time code standard, identify each frame. A predetermined time period may correspond to playback of a certain number of frames. Similarly, audio information may include time code information as well.

The various types of content may be provided in a format made up of units of relatively large granularity (LGUs). Smaller granularity units (SGUs) may be created by subdividing the LGUs provided by the content provider 14. The SGUs may be accessed by subscribers to the on-line information system 10. The SGUs may correspond to an amount of data that subscribers may be more interested in receiving on-line. For instance, in connection with content originally in the form of a book, in some cases, the subscribers may only wish to see one page. In connection with a research textbook for example, the subscriber may know a particular page cite and may wish to access that and only that particular page. The subscriber may prefer not to be charged for viewing the entire book and instead would rather be charged (if possible) only for viewing the page of interest. In this case, the SGU is a page. If the service provider 15 were forced to pay for the LGU when the unlimited access subscriber only wants the SGU, the system 10 may become cost ineffective.

In other cases, such as those involving audio and visual electronic data, an SGU may correspond to a predetermined time period. The subscriber may wish to view a portion of the overall content without being charged for the overall content. For example, the user may wish to view a movie (an LGU) for some period of time and then, after determining that the movie is not of interest, terminate the continued use of the content. It may be advantageous to only charge for the material that subscriber actually enjoyed (in SGUs). Thus, in the case of audio and video content, the SGUs may consist of predetermined time periods of information display.

Similarly, for software content, a time code SGU system may be created by timing the use of software. The software may be offered for use in predetermined time based SGUs. Alternatively, functionally based monitoring could be used. For example, with a telecopy program, the subscriber may be charged per telecopy or per page received or sent.

The content server 12 may receive content in LGUs and may offer that content to subscribers in SGUs as may be preferred by those subscribers. The content provided by the content providers 14 may be stored by the server 12 on the database 16. The content server 12 may also include an additional storage 18 which stores software, such as the software 20, 22 and 24, which controls the operation of the server 12.

The server 12 connects over the Internet 26 to a large number of subscribers who use clients 28a and 28b depicted in Figure 1. Each client 28a and 28b may be a client processor-based system with an Internet connection. A client 28 may access the Internet over an available connection to contact a web site associated with the content server 12. To access that site, the client 28 may supply a subscriber identification number which establishes the subscriber's right to access services provided by the service provider 15.

In one embodiment of the present invention, database access is afforded in return for a prepaid subscription fee. In one embodiment of the present invention, the subscription fee may be a set amount of money for unlimited access for a given period of time. In another embodiment of the present invention, the subscription fee may be in the form of a prepayment for a given number of SGU accesses. That is, the subscriber may prepay for a certain number of SGU accesses over a given period of time. In still other embodiments of the present invention, credit based systems may be utilized.

In accordance with one embodiment of the present invention, the client 28 may access the service provider 15 to research information from a large number of different content providers 14. In some cases, that content may be in the form of a variety of different media including textual media, graphical media, audio media, video media, software, and games, as a few examples. A predefined SGU may be associated with each media type. That is, the SGU associated with one media type may be different from the SGU associated with another type. Thus, in connection with textual materials, the SGU may be a page while in association with video materials, the SGU may be a time period, such as fifteen minutes.

In many cases, the content provided by the content providers 14 may be proprietary. For example, in some cases, the content may be copyrighted material. In other cases, the information may be proprietary because it is not widely available in the public domain. Thus, the content provider 14 may receive compensation in return for allowing access to the content.

The content server 12, in one embodiment of the present invention, may not only provide the content to the clients 28 but may also allocate subscription revenues among the content providers 14. At the same time, in some advantageous embodiments, the system 10 may also enhance the revenue potential for content providers 14.

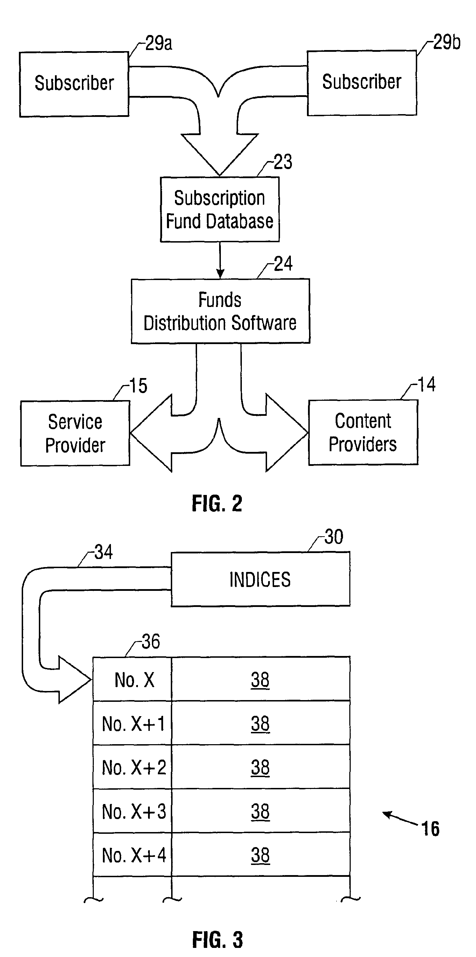

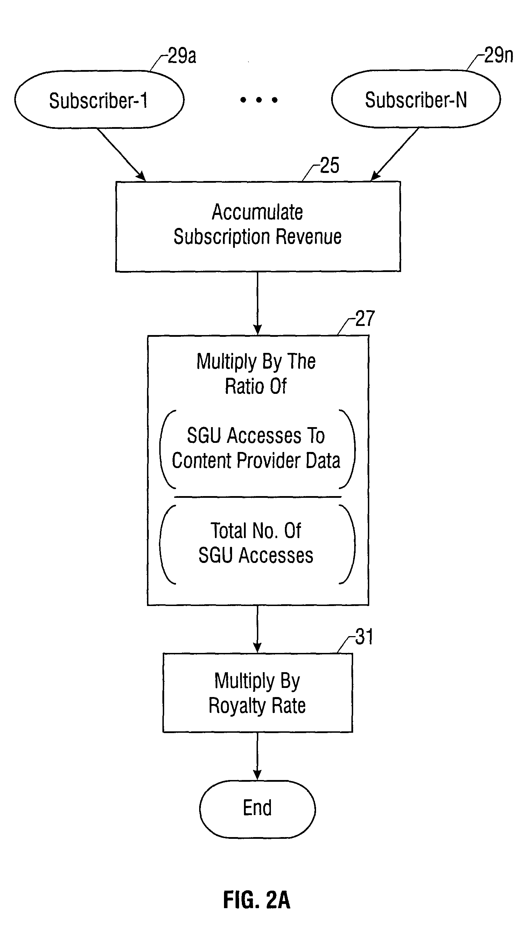

Referring to Figure 2, in accordance with one embodiment of the present invention, each subscriber, such as the subscribers 29a and 29b, pays a subscription fee which may be indicated in a subscription fund database 23 (associated with the database 16). Thus, in one embodiment, all the subscribers 29 may provide subscription fees in the form of prepaid funds for access to the server 12 and its database 16 under specific conditions. In one embodiment of the present invention, a condition may be unlimited access for a period of time. In another embodiment of the present invention, a condition may be access to a predetermined number of SGUs over a given time period. The subscription fund database 23 then tracks or accumulates subscription fees for a given period of time from all the various subscribers 29 to the system 10.

The fund distribution software 24 then allocates the subscription fees between the service provider 15 and the content providers 14. The content providers 14 include the owners of content provided in the database 16. The fund distribution software 24 equitably distributes the subscription fees among the various responsible content providers 14.

If the content providers 14 were compensated on a strict per access basis, it may be difficult in some cases, to offer unlimited prepaid access to the subscriber. For many subscribers, the absence of unlimited access may make the system 10 unattractive. For example, by providing access on a prepaid and unlimited basis, a sufficiently low price may attract a large number of subscribers to the system 10. However, if the subscribers were charged on a per access basis, they may be unwilling to endure the expense of each access. That is, before making the decision to incur the expense for a particular SGU access, the subscriber may attempt to determine if there is some other more cost effective option. Once the subscriber has prepaid for the service, the subscriber is more likely to actively use the service. Subscribers that use the system more often may become more comfortable with it and may come to depend on it to a greater extent.

The ability to reward content providers 14 on a percentage basis from the fund database 23 (whatever it may be) may actually implement a more desirable system from the content providers' point of view. In such a system, prepaid fees may be received from the subscribers. This encourages the subscribers to join the system 10 while rewarding content providers based on the success of the overall system 10.

The revenues paid to a particular content provider 14 may also be a function of the extent to which clients 28 actually access the SGUs provided by that content provider 14. Thus, the software 24 may allocate the content providers' portion of the subscription fund based on the number of accesses to SGUs provided by each content provider.

Referring to Figure 2A, the fund distribution software 24 tracks subscription fees from a number of subscribers indicated as 29a-29n. The subscription fees from the subscribers 29 builds a subscription revenue fund for a given period of time as indicated in block 25.

The subscription revenue is multiplied by the ratio of the SGU accesses to a content provider's data divided by the total number of SGU accesses as indicated in block 27. The resulting value is multiplied by a royalty rate of a particular content provider 14 as indicated in block 31. The royalty rate can vary from content provider to content provider or from work to work. The royalty rate may be set at a low enough level to ensure that the subscription fees that remain after paying the content providers exceeds the costs of the service provider plus a reasonable return. Certainly, the royalty rate is a fraction less than one.

Furthermore, the software 24, that accumulates the accesses on an SGU level, may still provide a royalty report on an LGU level. For example, the royalty to a given content provider may be based on subscriber accesses to pages of a book provided by the content provider. The royalty reported to that content provider may accumulate all the page accesses to report the royalty on the entire book. The content provider 14 may then actually receive revenues that are accumulated and reported to the content provider for the entire book or LGU. This may be useful to the content provider in understanding the basis for the royalties received. It may also be useful to some content providers in thereafter reallocating the royalties among individuals who have ownership interests through the content provider. For example, the content provider of a book may in turn owe revenues to contributors to that book, such as a contributor who provided photographs. Thus, the content provider's royalties may be reported either on a SGU by SGU level or may be cumulated on an LGU or per work basis, where the work is a book, an article, a video clip, an audio clip or the like.

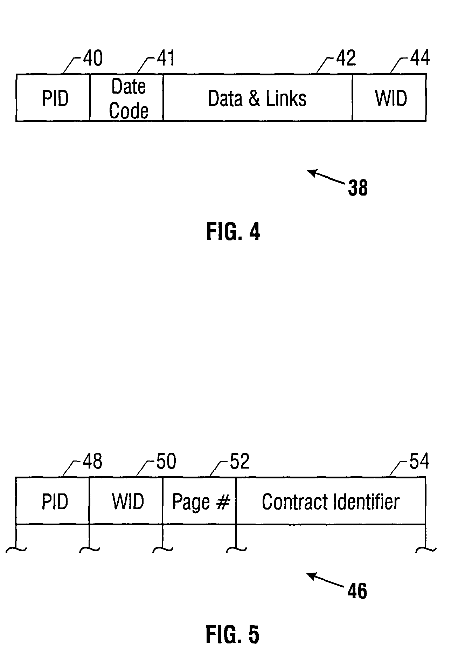

Referring to Figure 3, the database 16 may include content from a variety of content providers 14. Each work or group of works making up the content may include indices 30 which may have key words, codes or other search assisting information. When the client 28 seeks information from the system 10, a keyword search may be implemented. The search may locate indices 30 which contain those search terms. Once a selected keyword is located in the indices 30, a page pointer 34 may point from the indices 30 to a particular SGU, such as the page file 38, stored in the database 16. While Figure 3 illustrates a database as a physically separate set of SGUs in the form of pages, actual databases may contain data arranged in less rigid formats.

Once a search term is located, the page pointer 34 then points to the page file 38 that contains the search term, identified by the file number 36. The actual database page file 38 however may have no specific header information that identifies the particular paper page in a particular work.

Referring to Figure 4, one exemplary page file 38 format includes a page identifier (P1D) 40 and a date code 41. In one embodiment of the present invention, the PID 40 may be a randomly selected number which is pre-assigned by the server 12. This randomly selected PID 40 is associated in the database 16 with a particular SGU which, in turn, is associated with one or more content providers 14. The page file 38 is actually identified in the data provided to a client 28 by its PID 40 as opposed to a page number 36. Within the particular page file 38 are the data and links 42. The data corresponds to the actual information or content. In one embodiment, the data may include the text from a book page. The data may also incorporate hyperlinks which allow the user to jump from one particular page to footnotes or other materials which are cited on the page. Thus, the subscriber may mouse click on a link to jump to other material in the database 16.

The page file 38 may also include a work identifier (WID) 44. The WID 44 identifies the content data from which the page file 38 was taken. Thus, in the case of a book, the page file 38 may correspond to the data on a particular book page and the WID 44 may correspond to the overall book. The database 16 may include information which correlates the WID 44 to a particular content provider 14.

Referring to Figure 5, a database 16 table 46 may be utilized to store information to correlate SGUs, information received from particular content providers and PIDs 40. The table 46 may include a column 48 for the PID, a column 50 for the WID, a column 52 for the page number, and a column 54 for a contract identifier (CID). The CID column 54 identifies a particular contract associated with a particular content provider 14. The contract may set forth the terms, such as the royalty rate, for allocating subscription fees to a particular content provider 14. Knowing the PID arid the CID or the PID and the WID, one may access the other remaining information. In this way, preceding or ensuing pages associated with a particular page currently being viewed can be quickly identified by searching the table 46 for the adjacent page.

Advantageously, the PID 40 is the only page identifying information provided to the user. The PID 40 may be a relatively long, randomly generated number. The PID 40 may be correlated with the actual SGU only through the table 46. In this way, a hacker may not obtain page information to access preceding or ensuing pages by merely incrementing or decrementing the PID 40. The table 46 storing the correlation between the page number and the PID 40 may be stored in a secure region of the database 16. Thus, in some embodiments, the database 16 may be composed of a large number of separate databases or tables.

Additional security may be provided by only allowing the subscriber to access a single SGU at a time. This may be accomplished for example by using JAVA applets to serve up the SGU to the client 28. Then, the served-up SGUs may not be written to the client 28's disk storage. Instead, each SGU must be downloaded to volatile or random access memory (RAM). From RAM, the information may only be screen printed and only one SGU may be printed at a time. It is relatively cumbersome to download an SGU, manually print the SGU, download another SGU, and manually print again. Thus, content providers 14 may be confident that it is relatively unlikely that subscribers will attempt to copy entire LGUs, such as books or other media for distribution. Subscribers could more easily acquire such copies by simply copying a book at the library or duplicating a video or audio recording in a conventional manner.

In some cases, the PD 40 and WD 44 information may be coded into the particular page file 38 using the eXtensible Markup Language (XML). Tags may be included with hypertext elements which are specifically defined to provide the functions and features described herein. For example, SGUs may be identified within the markup language document using particular PID/WID tags.

In some cases, it may be advantageous to avoid downloading the actual XML format information to the client 28. Instead, the XML data may be utilized by the server 12. Thereafter, the XML data may be converted to a HyperText Markup Language (HTML) format for distribution to the clients 28.

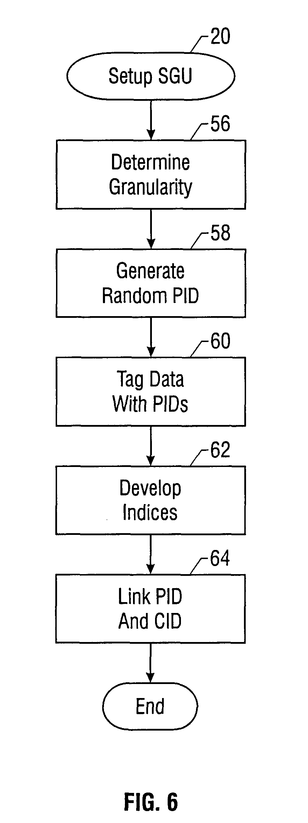

Turning next to Figure 6, the procedure 20 utilized to set up the database 16 in the organization described herein begins by determining the desired granularity as indicated in block 56. Thus, the data received from the content provider 14 may be segregated according to the predetermined granularity for each particular type of media. That is, the content which may be provided in one electronic format may be coded (in XML for example) with tags to identify the desired granularity.

Next, the PID 40 may be randomly generated as indicated in block 58. A PID 40 is assigned to each SGU as determined in block 56. The PID 40 may also be coded into the page file 38 as described previously.

The data received from the content providers 14 may be loaded into the database 16 with the PIDs 40 and WIDs 44 as granularity tags as indicated in block 60. The information may be encoded to develop the searchable indices 30 as indicated in block 62.

Thereafter, links may be provided between each PID 40 and its CID in the format indicated by the table 46. In addition, any actual hyperlinks which must be embedded within the SGU may be provided. At this point, the new content is now integrated into the database 16 in a searchable form for access by the clients 28.

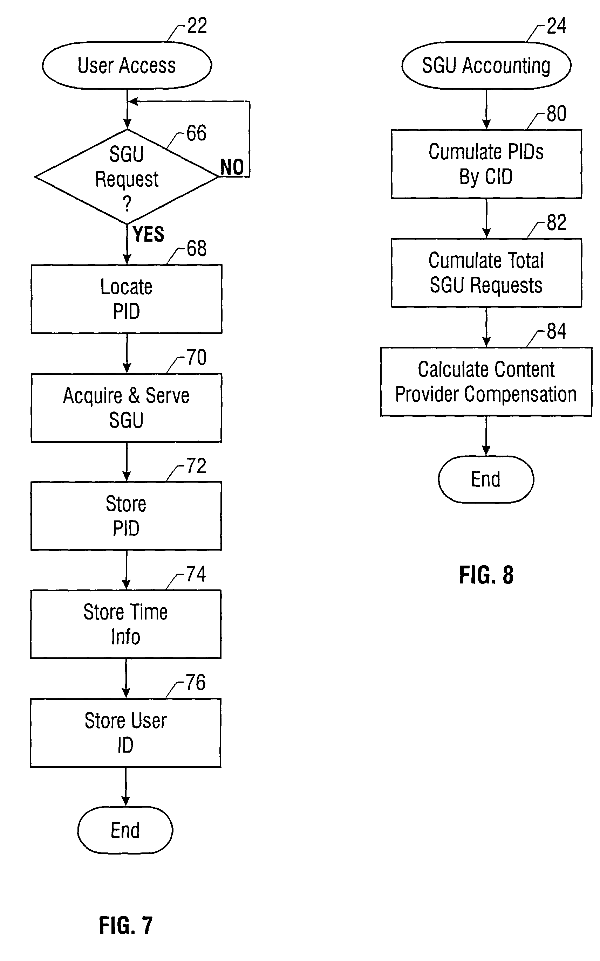

Turning next to Figure 7, a client 28 may access the database 16 via subscriber software 22. When a request for an SGU is identified, as indicated in diamond 66, a particular PID 40 is located in this database 16 as indicated block 68. Thus, the subscriber may request a particular SGU because the subscriber actually knows the desired SGU or because the subscriber has undertaken a search that identified the SGU. The search may provide a list of SGUs which contain information responsive to the search. The search may be a natural language search as one example. Once the search identifies a list of potential SGUs, the subscriber, in one embodiment of the present invention, may select any of those SGUs for viewing. For example, the subscriber may mouse click on a particular SGU listed on a display to automatically cause the SGU to be prepared for viewing.

At the same time the PID 40 is being located, the SGU is accessed in the database 16 and downloaded over the Internet 26 to the client 28 as indicated in block 70. The PID 40 is then stored as indicated in block 72. This stored PID information may be utilized to either accrue a charge to the subscriber or to accrue revenues to a particular content provider 14.

The time and date of the access may also be stored as indicated in block 74. This information may be useful in accruing revenues to content providers 14 in some cases. For example, the value of time sensitive content (such as newspapers and magazines) may depend on how old the information is. The older the material becomes, the less subscribers may be willing to pay for that information. Thus, if the information is originally encoded with a date code 41 (Figure 4), this date code 41 may be compared to the actual access date. Then, the subscriber may be assessed a charge or the content provider may be accorded revenue based on how old the information is. For example, in one embodiment, the older the information is, the less value is accorded to the content provider 14.

The subscriber identifier is then stored as indicated in block 76. The subscriber identifier may be useful in determining information about subscriber activities. In addition, if a subscriber is charged per access, the subscriber identifier is needed. Keeping a database of client access requests may also be beneficial in preventing fraudulent use of the system. For example, if one client 28 is currently active on the system 10 using a particular subscriber identifier, when a second access is attempted using the same subscriber identifier, the system 10 may identify misuse of the access privileges and may terminate one or both clients 28 using the same identifier.

Finally, considering Figure 8, the software 24 for compensating the content providers 14, in accordance with one embodiment of the present invention, begins by accumulating the PIDs 40 by CID as indicated in block 80. In other words, each time a PID 40 is accessed and then stored (as indicated in connection with Figure 7), it may subsequently be accumulated with other PIDs 40 associated with a given CID. The PIDs 40 may be tied to the CIDs by first linking a PID to its associated WID and then tying the WID to a CID. Thus, accesses of SGUs associated with a given content provider 14 may be cumulated. This cumulation may be done on an ongoing basis or may be done at the end of a given period of time.

In addition, the total number of SGU accesses may be cumulated as indicated in block 82. Then, the compensation for each content provider 14 may be calculated, as suggested in block 84. A number of different :revenue calculation schemes may be implemented. In one embodiment of the present invention, revenue may be accrued based on the relative number of times SGUs provided by a content provider are accessed by subscribers. For example, if there were a total of one million SGU accesses and a particular content provider provided the content which accounted for one hundred thousand of those accesses, that content provider would be entitled to ten percent of the accumulated subscription fee revenue multiplied by the content provider's royalty rate. Thus, in one embodiment of the present invention, the accumulated subscription fees may be divided among those content providers based on the royalty rate times the number of times SGUs provided by the content provider were accessed divided by the total number of SGU accesses.

In another embodiment of the present invention, some content providers may receive more than or less than their pro rata share. For example, in some cases, the content provided by one content provider may be considered more valuable, for example because it attracts more users to the system 10. In return, such a content provider may get an additional benefit, for example in the form of a higher royalty rate.

In other embodiments of the present invention, the subscription fees may be accrued separately according to the types of content (e.g., text, audio, video, etc.). Then, a percentage of the overall subscription fee fund may be dedicated to each type of content for division based on relative SGU accesses.

Once the allocation of the subscription fees is complete, the responsible content providers may be paid. Conventionally, the content providers may be paid on a periodic basis based on subscriber access during a preceding period. In accordance with one embodiment of the present invention, the server 12 automatically calculates the compensation due each content provider and automatically generates a wire transfer or prints a check to make those payments.

In summary, embodiments of the system 10 may be advantageous to content providers, service providers, and subscribers. Subscribers benefit because they may have access to material in advantageous granularities. In effect, the subscriber "pays" (or causes the service provider 15 to incur costs) for only what the subscriber needs. Moreover, in some embodiments of the present invention, the subscriber may obtain access to the informational database on a prepaid, unlimited usage basis. When proceeds are accumulated and provided to the content providers on a percentage basis, the subscribers may be afforded unlimited access at one location to content from many sources. This may be advantageous both for the subscribers and the content providers who may be rewarded based on frequency of use.

Content providers may benefit through the ability of leverage their works over the Internet. In some embodiments, the system 10 prevents unauthorized copying of the content to an extent at least as great as that provided in conventional paper formats.

The system 10 is advantageous to a service provider 15. The system, in some embodiments, reduces the likelihood that the proceeds that must be paid to the content providers exceeds a reasonable proportion of the subscription fees. If usage is low, for example in a set-up stage, a service provider in a conventional metered system may be called upon to pay fixed fees which exceed a reasonable percentage of the total revenues of the system 10.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. A method comprising:
storing content data from a plurality of content providers on an on-line database in units of a first granularity;
making said content data available over a computer network in said first granularity to subscribers for a fee; and
allocating said subscription fees to each provider based at least in part on the relative number of times content provided by a provider is accessed by subscribers in units of a first granularity.

2. The method of claim 1 further including allocating said subscription fees to each provider based on the ratio of the number of times units of a first granularity, provided by the content provider, are accessed divided by the total number of unit accesses over a given period of time.

3. The method of claim 1 further including receiving said content data in units of a second granularity and converting said content data into units of a first granularity that is smaller than said second granularity.

4. The method of claim 3 including coding said first granularity into said content data.

5. The method of claim 4 including placing mark-up language tags into said data to identify said first granularity.

6. The method of claim 5 including placing said tags into said data using an eXtensible Markup Language.

7. The method of claim 6 including converting said data from an eXtensible Markup Language to a HyperText Markup Language before making the data available over the computer network to the subscribers.

8. The method of claim 2 including multiplying said ratio times a royalty rate.

9. The method of claim 8 including allocating subscription fees as a royalty to content providers who are copyright owners.

10. An article comprising a medium storing instructions that cause a processor-based system to:
store content data from a plurality of content providers on an on-line database in units of a first granularity;
make said content data available in said granularity over a computer network to subscribers for a fee; and
allocate said subscription fees to each provider based at least in part on the relative number of times content provided by a provider is accessed by subscribers in units of a first granularity.

11. The article of claim 10 further storing instructions that cause a processor-based system to allocate said subscription fees to each provider based on the ratio of the number of times units of a first granularity, provided by the content provider, are accessed divided by the total number of unit accesses over a given period of time.

12. The article of claim 10 further storing instructions that cause a processor-based system to receive said content data in units of a second granularity and convert said content data into units of said first granularity that is smaller than said second granularity.

13. The article of claim 12 further storing instructions that cause a processor-based system to access said units based on coding contained in said content data.

14. The article of claim 13 further storing instructions that cause a processor-based system to recognize markup language tags in said data that identify said first granularity.

15. The article of claim 11 further storing instructions that cause said processor-based system to multiply said ratio times a royalty rate.

16. The article of claim 15 further storing instructions that cause said processor-based system to allocate the remainder of said subscription fees to a service provider that makes said content available over the computer network.

17. A method comprising:
receiving textual content from content providers, said content having a first granularity;
breaking the content into units of a second granularity that is smaller than said first granularity;
posting said content on an on-line database for access by subscribers in said units of said second granularity; and
compensating said content providers based on subscriber accesses of content in units of said second granularity.

18. The method of claim 17 including receiving subscription fees from subscribers in return for access to said on-line database.

19. The method of claim 18 including allocating said subscription fees to each content provider based at least in part on the relative number of times content in units of said second granularity is accessed by subscribers.

20. The method of claim 17 wherein receiving textual content from a plurality of content providers includes receiving said content from said content providers in a non-electronic form and converting said content to electronic data.

21. The method of claim 20 including coding said second granularity into said data.

22. The method of claim 21 including placing markup language tags into said data to identify said second granularity.

23. An article comprising a medium that stores instructions that cause a processor-based system to:
detect tags identifying a first granularity in markup language data representing textual content from content providers;
provide said content on an on-line database for access by subscribers in said units of said first granularity; and
allocate compensation to said content providers based on subscriber accesses of said content in units of said first granularity.

24. The article of claim 23 further storing instructions that cause a processor-based system to allocate subscription fees from subscribers to each content provider based at least in part on the relative number of times said units are accessed by subscribers.

25. The article of claim 23 further storing instructions that cause said processor-based system to perform word searches through said database.

26. The article of claim 23 further storing instructions that cause a processor-based system to code said first granularity into said data.

27. The article of claim 26 further storing instructions that cause a processor-based system to place markup language tags into said data to identify said first granularity.

28. A system comprising:
a server;
a storage coupled to said server; and
software stored in said storage that enables said server to store content data from a plurality of content providers in an on-line database in units of a first granularity, make said content data available in said first granularity over a computer network to subscribers for a fee, and allocate said fees to content providers based at least in part on the relative number of times units provided by each provider are accessed by subscribers.

29. The system of claim 28 wherein said software enables said server to receive said content data in units of a second granularity and convert said content data into units of a first granularity that is smaller than said second granularity.

30. The system of claim 28 wherein said software enables said server to allocate said fees to each provider based on the ratio of the number of times units provided by the content provider are accessed divided by the total number of unit accesses over a given period of time.

31. The system of claim 30 wherein said software enables said ratio to be multiplied by a royalty rate to obtain the compensation for a content provider.
